# EUROPEAN PATENT APPLICATION

(11) **EP 4 787 935 A1**
(43) Date of publication of application: **05.08.2026**
(21) Application number: 24870354.8
(22) Date of filing: 03.09.2024
(51) Int. Cl.: H04W 24/08

(54) **DATA COLLECTION METHOD, REFERENCE SIGNAL SENDING METHOD, TERMINAL, AND NETWORK SIDE DEVICE**

(30) Priority: 26.09.2023 CN 202311255282
(71) Applicant: Datang Mobile Communications Equipment Co., Ltd., Beijing 100085 (CN)
(72) Inventor: ZUO, Jun, Beijing 100085 (CN); ZHU, Min, Beijing 100085 (CN); FEI, Yongqiang, Beijing 100085 (CN); GAO, Qiubin, Beijing 100085 (CN)
(74) Representative: Studio Torta S.p.A.
(86) International application number: PCT/CN2024/116566
(87) International publication number: WO 2025/066808

(57) **Abstract**

Embodiments of the present disclosure provide a data collection method, a reference signal transmission method, a terminal, and a network side device. The method is applied to a terminal and comprises: on the basis of reference signal configuration information, measuring a reference signal sent by a network side device, and obtaining a measurement result of the reference signal.

## Description

### CROSS-REFERENCES TO RELATED APPLICATIONS

The present application claims priority to Chinese patent application No. 202311255282.5 filed on September 26, 2023, entitled "Data Collection Method, Reference Signal Sending Method, Terminal, and Network Side Device", which is hereby incorporated by reference in its entirety.

### FIELD

The present application relates to the field of wireless communication, and in particular, to a data collection method, a reference signal transmission method, a terminal, and a network side device.

### BACKGROUND

In new radio (NR) systems, to combat path loss in high-frequency scenarios, transmitters and receivers employ beam management (BM) to obtain matched beam pairs, thereby improving beamforming gain. In existing downlink beam management procedures, a network side device selects a suitable transmit beam for subsequent communication based on beam measurement information reported by a terminal, and indicates selected beam information to the terminal. To obtain the optimal beam pair, the network side device needs to transmit channel state information reference signal (CSI-RS)/synchronization signal block (SSB) on all transmit beams (Tx beams), which results in significant reference signal resource consumption. Meanwhile, the terminal needs to respectively measure the CSI-RS/SSB transmitted on all Tx beams using all receive beams (Rx beams), leading to substantial measurement overhead.

To address these issues, the use of artificial intelligence (AI)/machine learning (ML) techniques has been proposed. Based on measurements of partial beam (pairs) or historical beam (pairs) measurements, the optimal beam (pairs) may be predicted, thereby reducing reference signal resource overhead, terminal measurement overhead, and measurement latency.

Currently, model training and inference may be performed on either the network side device or the terminal side device. However, when the model is trained on the terminal side, how to collect beam quality data on the terminal side to complete model training/updating/monitoring remains a problem that urgently needs to be solved by those skilled in the art.

### BRIEF SUMMARY

To address the problems existing in related art, embodiments of the present application provide a data collection method, a reference signal transmission method, a terminal, and a network side device.

An embodiment of the present application provides a data collection method, performed by a terminal, including:
measuring a reference signal transmitted by a network side device according to reference signal configuration information, to obtain a measurement result of the reference signal,
where the reference signal configuration information is obtained through at least one of following:
   receiving the reference signal configuration information transmitted from the network side device; or
   receiving the reference signal configuration information transmitted, based on the indication information of the terminal, from the network side device

In an embodiment, the reference signal configuration information includes at least one of following:
configuration information of reference signals in a first reference signal set, where measurement results of the reference signals in the first reference signal set are used as input data for model training, model updating, or model monitoring;
configuration information of reference signals in a second reference signal set, where measurement results of the reference signals in the second reference signal set are used as label information for model training, model updating, or model monitoring;
a relationship between a first reference signal set and a second reference signal set; or
pattern information of a first reference signal set.

In an embodiment, the configuration information includes at least one of following:
time domain information, frequency domain information, sequence information, and power information of a reference signal.

In an embodiment, the relationship between the first reference signal set and the second reference signal set includes at least one of following:
the first reference signal set is a subset of the second reference signal set;
the first reference signal set is equal to the second reference signal set;
a beam corresponding to any reference signal in the first reference signal set is different from a beam corresponding to any reference signal in the second reference signal set; or
a spatial reception parameter corresponding to any reference signal in the first reference signal set is different from a spatial reception parameter corresponding to any reference signal in the second reference signal set.

In an embodiment, receiving the reference signal configuration information transmitted from the network side device includes:
receiving a system message transmitted from the network side device, where the system message carries the reference signal configuration information.

In an embodiment, receiving the reference signal configuration information transmitted, based on the indication information of the terminal, from the network side device includes:
receiving multiple candidates of reference signal configuration information transmitted from the network side device;
selecting at least one candidate of reference signal configuration information from the multiple candidates of reference signal configuration information;
transmitting the indication information to the network side device, where the indication information is used to indicate the at least one candidate of reference signal configuration information selected by the terminal; and
receiving the reference signal configuration information transmitted, based on the indication information of the terminal, from the network side device.

In an embodiment, receiving the reference signal configuration information transmitted, based on the indication information of the terminal, from the network side device includes:
transmitting the indication information to the network side device, where the indication information is used to indicate the reference signal configuration information requested by the terminal; and
receiving the reference signal configuration information transmitted, based on the indication information of the terminal, from the network side device.

In an embodiment, the indication information includes at least one of following:
a quantity of reference signals in a first reference signal set;
a quantity of reference signals in a second reference signal set;
a relationship between a first reference signal set and a second reference signal set;
a model identifier;
a model function identifier;
a dataset identifier;
a requested data volume or a reference signal transmission window duration; or
a request reason or a request purpose.

In an embodiment, receiving the reference signal configuration information transmitted, based on the indication information of the terminal, from the network side device includes:
receiving a radio resource control (RRC) message transmitted from the network side device, where the RRC message carries the reference signal configuration information.

In an embodiment, after obtaining the measurement result of the reference signal, the method further includes:
transmitting first information to the network side device, where the first information is used for requesting to stop reference signal transmission or deactivate reference signal configuration information; and
receiving second information transmitted from the network side device, where the second information is used to indicate the network side device deactivating the reference signal configuration information or indicate the terminal to stopping receiving reference signals.

An embodiment of the present application provides a signal transmission method, performed by a network device, including:
transmitting reference signal configuration information to a terminal; or, transmitting reference signal configuration information to a terminal based on indication information of the terminal; and
transmitting a reference signal to the terminal based on the reference signal configuration information, where the reference signal is used by the terminal to measure the reference signal to obtain a measurement result of the reference signal.

In an embodiment, the reference signal configuration information includes at least one of following:
configuration information of reference signals in a first reference signal set, where measurement results of the reference signals in the first reference signal set are used as input data for model training, model updating, or model monitoring;
configuration information of reference signals in a second reference signal set, where measurement results of the reference signals in the second reference signal set are used as label information for model training, model updating, or model monitoring;
a relationship between a first reference signal set and a second reference signal set; or
pattern information of a first reference signal set.

In an embodiment, the configuration information includes at least one of following:
time domain information, frequency domain information, sequence information, and power information of a reference signal.

In an embodiment, the relationship between the first reference signal set and the second reference signal set includes at least one of following:
the first reference signal set is a subset of the second reference signal set;
the first reference signal set is equal to the second reference signal set;
a beam corresponding to any reference signal in the first reference signal set is different from a beam corresponding to any reference signal in the second reference signal set; or
a spatial reception parameter corresponding to any reference signal in the first reference signal set is different from a spatial reception parameter corresponding to any reference signal in the second reference signal set.

In an embodiment, transmitting the reference signal configuration information to the terminal includes:
transmitting a system message to the terminal, where the system message carries the reference signal configuration information.

In an embodiment, transmitting the reference signal configuration information to the terminal based on the indication information of the terminal includes:
transmitting multiple candidates of reference signal configuration information to the terminal;
receiving the indication information transmitted from the terminal, where the indication information is used to indicate at least one candidate of reference signal configuration information selected by the terminal from the multiple candidates of reference signal configuration information; and
transmitting the reference signal configuration information to the terminal based on the indication information of the terminal.

In an embodiment, transmitting the reference signal configuration information to the terminal based on the indication information of the terminal includes:
receiving the indication information transmitted from the terminal, where the indication information is used to indicate the reference signal configuration information requested by the terminal; and
transmitting the reference signal configuration information to the terminal based on the indication information of the terminal.

In an embodiment, the indication information includes at least one of following:
a quantity of reference signals in a first reference signal set;
a quantity of reference signals in a second reference signal set;
a relationship between a first reference signal set and a second reference signal set;
a model identifier;
a model function identifier;
a dataset identifier;
a requested data volume or a reference signal transmission window duration; or
a request reason or a request purpose.

In an embodiment, transmitting the reference signal configuration information to the terminal based on the indication information of the terminal includes:
transmitting a radio resource control (RRC) message to the terminal, where the RRC message carries the reference signal configuration information.

In an embodiment, after transmitting the reference signal to the terminal based on the reference signal configuration information, the method further includes:
receiving first information transmitted from the terminal, where the first information is used for requesting to stop reference signal transmission or deactivate reference signal configuration information; and
transmitting second information to the terminal, where the second information is used to indicate the network side device deactivating the reference signal configuration information or indicate the terminal stopping receiving reference signals.

An embodiment of the present application provides a terminal, including a memory, a transceiver and a processor,
where the memory is used for storing a computer program; the transceiver is used for receiving and transmitting data under control of the processor; and the processor is used for reading the computer program in the memory and performing the data collection method described in the embodiments of the present application.

An embodiment of the present application provides a network side device, including: a memory, a transceiver, and a processor,
where the memory is used for storing a computer program; the transceiver is used for receiving and transmitting data under control of the processor; and the processor is used for reading the computer program in the memory and performing the reference signal transmission method described in the embodiments of the present application.

An embodiment of the present application further provides a data collection apparatus, used in a terminal, including:
a collection unit, used for measuring a reference signal transmitted from a network side device according to reference signal configuration information, to obtain a measurement result of the reference signal,
where the reference signal configuration information is obtained through at least one of following:
   receiving the reference signal configuration information transmitted from the network side device; or
   receiving the reference signal configuration information transmitted, based on indication information of the terminal, from the network side device.

An embodiment of the present application provides a signal transmitting apparatus, used in a network side device, including:
a transmission unit, used for transmitting reference signal configuration information to a terminal; or, transmitting reference signal configuration information to a terminal based on indication information of the terminal; and
transmitting a reference signal to the terminal based on the reference signal configuration information, where the reference signal is used by the terminal to measure the reference signal to obtain a measurement result of the reference signal.

An embodiment of the present application further provides a processor readable storage medium, where the processor readable storage medium stores a computer program configured to cause a processor to perform the data collection method or the reference signal transmission method described in the embodiments of the present application.

In the data collection method, reference signal transmission method, terminal, and network side device provided by the embodiments of the present application, after receiving the reference signal configuration information transmitted from the network side device, the terminal may measure the reference signal based on the reference signal configuration information, and perform model training, updating and monitoring according to the measurement result of the reference signal. This enables the collection of model training data without requiring the network side device to transmit the reference signal on all transmit beams, and without requiring the terminal to measure the reference signal on all beams, thus reducing the reference signal resource overhead of the network side device, the measurement overhead of the terminal and the measurement latency of the terminal.

### BRIEF DESCRIPTION OF THE DRAWINGS

To clearly illustrate the solutions in the embodiments of the present application or the prior art, the drawings used in the description of the embodiments or the prior art are briefly described below. Apparently, the drawings in the following description are only some embodiments of the present application, and other drawings may be obtained according to these drawings without any creative effort for those skilled in the art.
FIG. 1 is a first flowchart of a data collection method according to an embodiment of the present application;
FIG. 2 is a second flowchart of a data collection method according to an embodiment of the present application;
FIG. 3 is a third flowchart of a data collection method according to an embodiment of the present application;
FIG. 4 is a fourth flowchart of a data collection method according to an embodiment of the present application;
FIG. 5 is a flowchart of a reference signal transmission method according to an embodiment of the present application;
FIG. 6 is a structural diagram of a terminal according to an embodiment of the present application;
FIG. 7 is a structural diagram of a network side device according to an embodiment of the present application;
FIG. 8 is a structural diagram of a data collection apparatus according to an embodiment of the present application;
FIG. 9 is a structural diagram of a reference signal transmission apparatus according to an embodiment of the present application.

### DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar to it.

The solutions in the embodiments of the present application are clearly and completely described in the following with reference to the accompanying drawings in the embodiments of the present application. Apparently, these embodiments are only a part of the embodiments of the present application, and not all of the embodiments. All other embodiments obtained by those skilled in the art based on the embodiments of the present application without any creative effort belong to the scope of the present application.

To facilitate a clearer understanding of the various embodiments of the present application, an introduction to some relevant technical knowledge is provided below.

In the existing beam measurement procedure, the network side device configures the terminal with CSI reporting information and associated measurement resources through radio resource control (RRC) signaling. When the CSI reporting content includes L1-RSRP or Signal to Interference noise ratio (SINR), the terminal reports the indices of the top N reference signals in the measurement resources and their corresponding L1-RSRP or L1-SINR, where N is configured by the network side device. From the above procedure, it can be seen that the existing beam measurement mechanism involves the network side device configuring terminal-level beam measurement reference signals. The terminal measures these reference signals and reports the beam measurement results back to the network side device, enabling the network side device to select the optimal downlink transmission beam.

The 3rd generation partnership project (3GPP) has proposed the use of artificial intelligence (AI)/machine learning (ML) techniques. Based on measurements of partial beam (pairs) or historical beam pair measurements, the optimal beam (pairs) may be predicted, thereby reducing reference signal resource overhead, terminal measurement overhead, and measurement latency. Within this context, the air interface AI project has identified the following two sub-use cases as AI-based beam management sub-use cases:

Beam management use case 1 (BM-case1): spatial domain beam prediction, which involves predicting the top-K beam (pairs) in Set A based on the measured Set B at a specific moment.

Beam management use case 2 (BM-case2): temporal domain beam prediction, which involves predicting the top-K beam (pairs) for Set A at future N' moments based on the measured Set B at past N moments.

When training AI/ML models, it is necessary to obtain input data and label information. Model input information may include the following.
(1) Measurement results of beam set Set B, such as layer 1 (L1) - reference signal received power (RSRP). To obtain this type of data, the network side device needs to configure CSI-RS/SSB resources transmitted on the beams within Set B. The terminal performs measurements to obtain the results.
(2) Downlink transmit (Tx) or receive beam identifier (Rx beam ID). The beam set Set B may be a fixed pattern, selected from pre-configured patterns, or being a random pattern. When the beam set Set B is a pre-configured or random pattern, the transmit beam identifier (Tx beam ID) is used as model input (for downlink Tx beam prediction) or both Tx beam ID and Rx beam ID are used as model input (for beam pair prediction), which may improve the model's prediction accuracy.

The output of the AI/ML model may be either an identification (ID) of the predicted top-K beam (pairs) for Set A or predicted RSRP of the beam (pairs) for Set A. Regardless of which model output is used as the label, the network side device needs to configure CSI-RS/SSB resources transmitted on the beam set Set A, and the terminal perform the corresponding measurements. During implementation, beam quality refers to the quality of reference signals transmitted on that beam (such as L1-RSRP of the reference signals), while the beam ID refers to the index information of the reference signals transmitted on that beam.

For BM-Case1 (spatial domain beam prediction), the beams in Set B and Set A may be different. For example, Set B may consist of narrow beams while Set A consists of wide beams, or the beams in Set B may be a subset of those in Set A. For BM-Case2 (temporal domain beam prediction), in addition to scenarios where Set B and Set A correspond to narrow/wide beams respectively or Set B is a subset of Set A, it also includes cases where Set B and Set A are equal.

Currently, 3GPP has discussed methods for collecting training data on the terminal side, considering both network-triggered (Option 1) and terminal-requested (Option 2) approaches as potential methods. If model training is performed on the terminal side, the terminal may collect data, and the model may be trained either by the terminal itself or on a third-party server (such as a chipset vendor's server). To train an AI/ML model for beam management, the training data includes beam quality. This requires the network side device to transmit reference signals on the beams, and the terminal to perform measurements to obtain the quality of the reference signals (e.g., L1-RSRP). The terminal's capability to measure beams is limited. For example, there is a limit to the quantity of reference signals a terminal may measure. The terminal needs to collect suitable data for AI model training/model updating, etc. From the network side device's perspective, transmitting reference signals for terminal data collection may incur significant overhead if different terminals collect data corresponding to different beam combinations, as the network side device may need to transmit reference signals on various beams. Currently, there is no existing technique for configuring reference signals specifically for the UE side to collect beam quality data to complete model training/updating/monitoring. There is no specific method yet for initiating a data collection process, including how the terminal requests data and how the network side device cooperates or responds to the terminal's requests.

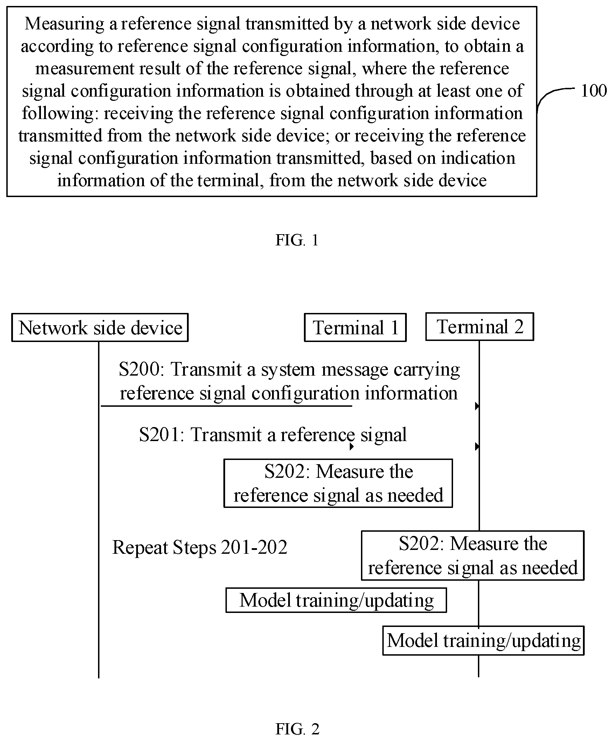

FIG. 1 is a first flowchart of a data collection method according to an embodiment of the present application. As shown in FIG. 1, the method may be performed by a terminal, the method includes:
Step 100: measuring a reference signal transmitted by a network side device according to reference signal configuration information, to obtain a measurement result of the reference signal, where the reference signal configuration information is obtained through at least one of following: receiving the reference signal configuration information transmitted from the network side device; or receiving the reference signal configuration information transmitted, based on indication information of the terminal, from the network side device.

Specifically, in the embodiments of the present application, after receiving the reference signal configuration information transmitted from the network side device, the terminal may measure the reference signal based on the received reference signal configuration information to obtain the measurement result of the reference signal. Then, the collected measurement result of the reference signal may be used as model training data to perform model training, model updating, or model monitoring. It should be noted that since model monitoring assesses model performance based on monitoring results over a period of time, model monitoring may be understood as or replaced by performance monitoring. The terminal may obtain reference signal configuration information in various ways. For example, the terminal may directly obtain reference signal configuration information transmitted autonomously by the network side device. Alternatively, the terminal may first transmit indication information to the network side device and then receive reference signal configuration information transmitted by the network side device based on the indication information of the terminal, thereby effectively balancing the reference signal transmission overhead of the network side device and the terminal's requirements.

In the data collection method provided by the embodiments of the present application, after receiving the reference signal configuration information transmitted from the network side device, the terminal may measure the reference signal based on the reference signal configuration information, and perform model training, updating and monitoring according to the measurement result of the reference signal. This enables the collection of model training data without requiring the network side device to transmit the reference signal on all transmit beams, and without requiring the terminal to measure the reference signal on all beams, thus reducing the reference signal resource overhead of the network side device, the measurement overhead of the terminal and the measurement latency of the terminal.

In an embodiment, the reference signal configuration information includes at least one of following:
configuration information of reference signals in a first reference signal set, where measurement results of the reference signals in the first reference signal set are used as input data for model training, model updating, or model monitoring;
configuration information of reference signals in a second reference signal set, where measurement results of the reference signals in the second reference signal set are used as label information for model training, model updating, or model monitoring;
a relationship between a first reference signal set and a second reference signal set; or
pattern information of a first reference signal set.

Specifically, when training AI/ML models, it is necessary to obtain input data and label information. In the embodiments of the present application, the measurement results of the reference signals in the first reference signal set are used as input data for model training, model updating, or model monitoring. The measurement results of the reference signals in the second reference signal set are used as label information for model training, model updating, or model monitoring. During implementation, beam quality refers to the quality of reference signals transmitted on that beam. The first reference signal set represents beam set Set B, and the second reference signal set represents beam set Set A.

In an embodiment, the relationship between the first reference signal set and the second reference signal set includes: the first reference signal set is a subset of the second reference signal set; the first reference signal set and second reference signal set are equal; the beam corresponding to any reference signal in the first reference signal set is different from the beam corresponding to any reference signal in the second reference signal set; and the spatial reception parameter corresponding to any reference signal in the first reference signal set and the spatial reception parameter corresponding to any reference signal in the second reference signal set are different. The pattern information of the first reference signal set is used to indicate the reference signals included in the first reference signal set that the terminal needs to measure. In an embodiment, when the first reference signal set and the second reference signal set are equal, the reference signal configuration information may only configure the first reference signal set or the second reference signal set. When the first reference signal set is a subset of the second reference signal set, the reference signal configuration information may not carry the configuration information of the reference signals in the first reference signal set or the pattern information of the first reference signal set, and the terminal may independently determine the reference signals to be measured in the first reference signal set based on the measurement results of the reference signals in the second reference signal set.. Thus, it enables the terminal to flexibly obtain the configuration information of the reference signals to be measured in various ways.

In the data collection method provided by the embodiments of the present application, the reference signal configuration information includes one or more of configuration information of reference signals in the first reference signal set, configuration information of reference signals in the second reference signal set, the relationship between the first reference signal set and the second reference signal set, and pattern information of the first reference signal set. This allows the terminal to flexibly obtain the configuration information of the reference signals to be measured in various ways, and thus collect the input data and label information required for model training, so as to complete the training, monitoring and updating of the model on the terminal side.

In an embodiment, the configuration information includes at least one of following:
time domain information, frequency domain information, sequence information, and power information of a reference signal.

Specifically, in the embodiments of the present disclosure, the time domain information, frequency domain information, sequence information, and power information of the reference signal to be measured are indicated to the terminal through the configuration information of the reference signal in the first reference signal set and the configuration information of the reference signal in the second reference signal set. This enables the terminal to accurately measure the reference signal based on the configuration information, to obtain the measurement result of the reference signal, and perform the training, monitoring and updating of the model.

In an embodiment, receiving the reference signal configuration information transmitted from the network side device includes:
receiving a system message transmitted from the network side device, where the system message carries the reference signal configuration information.

Specifically, in the embodiments of the present disclosure, the network side device may autonomously transmit reference signal configuration information to the terminal, allowing the terminal to directly obtain the reference signal configuration information and measure the reference signal. In an embodiment, the network side device may broadcast the reference signal configuration information to each terminal via system messages. That is, the network side device autonomously determines the reference signal configuration and provides the same reference signal configuration information to all terminals. After receiving the reference signal configuration information carried in the system message, the terminal may measure the reference signal as needed for data collection and model training. In the above method, the network side device utilizes system messages to carry reference signal configuration information. The implementation is simple to implement, offering higher efficiency in configuring the reference signal, and effectively saves signaling resource overhead and reference signal transmission overhead.

FIG. 2 is a second flowchart of a data collection method according to an embodiment of the present application. As shown in FIG. 2, the method includes:
Step 200: a network side device transmits, to a terminal, a system message carrying reference signal configuration information for the terminal to collect training data. The reference signal configuration information includes the following.
(1) Configuration information (such as time domain, frequency domain, sequence, power, etc.) of the reference signals in a first reference signal set (beam set Set B) used for an AI-based beam management model.
   For example, the first reference signal set is: {CSI-RS reference signal 9, CSI-RS reference signal 13, CSI-RS reference signal 18, CSI-RS reference signal 22}.
(2) Configuration information (such as time domain, frequency domain, sequence, power, etc.) of the reference signals in a second reference signal set (beam set Set A) used for an AI-based beam management model.
   For example, the second reference signal set is: {CSI-RS reference signal 0, CSI-RS reference signal 1, ..., CSI-RS reference signal 31}, and time domain information and frequency domain information of CSI-RS reference signals 0 to 31.
(3) The relationship between the first reference signal set (beam set Set B) and/or the second reference signal set (beam set Set A), such as subset relationship, equality relationship, or difference relationship.
   For example, the first reference signal set and the second reference signal set are of subset relationship.
(4) Pattern information of the first reference signal set. When the first reference signal set is a subset of the second reference signal set, the pattern information of the first reference signal set is used to indicate which reference signals in the second reference signal set are the reference signals in the first reference signal set to be measured by the terminal.

When the first reference signal set is equal to the second reference signal set, or when the first reference signal set is a subset of the second reference signal set, the configuration information of the reference signals in the first reference signal set and the pattern information of the first reference signal set are optional. That is, the network side device may configure only the configuration information of the reference signals in the second reference signal set, and the terminal may select the pattern of the first reference signal set from the second reference signal set. For example, the terminal selects reference signals in the second reference signal set whose L1-RSRP is greater than a threshold to form the first reference signal set.

Step 201: the network side device transmits a reference signal to the terminal.

Step 202: each terminal measures the reference signal as needed, based on the reference signal configuration information obtained in Step 200. When a terminal needs model training or model updating, it receives the reference signal according to the reference signal configuration information in Step 200. Otherwise, the terminal does not receive the reference signal.

Steps 201-202 are repeated until the terminal collects sufficient data according to its requirements and then performs model training or model updating based on the collected data.

For example, when a terminal receives a system message, it receives CSI-RS reference signals 0 to 31 according to the received reference signal configuration information. After collecting a certain amount of data (e.g., 30,000 data samples), it stops receiving the aforementioned reference signals. The L1-RSRP of {CSI-RS reference signal 9, CSI-RS reference signal 13, CSI-RS reference signal 18, CSI-RS reference signal 22} from these 30,000 samples is used as the model input, and the L1-RSRP of {CSI-RS reference signal 0, CSI-RS reference signal 1, ..., CSI-RS reference signal 31} is used as the model output to train an AI model. The AI model may achieve beam quality prediction of the optimal beam of the full set of 32 beams based on 4 subset beams.

In the data collection method provided by the embodiments of the present application, the network side device provides same reference signal configuration information to all terminals via system messages. The terminals measure the reference signal as needed to collect training data and train models. The implementation is simple, offering higher efficiency in configuring reference signals, and effectively saves signaling resource overhead and reference signal transmission overhead.

In an embodiment, receiving the reference signal configuration information transmitted, based on the indication information of the terminal, from the network side device includes:
receiving multiple candidates of reference signal configuration information transmitted from the network side device;
selecting at least one candidate of reference signal configuration information from the multiple candidates of reference signal configuration information;
transmitting the indication information to the network side device, where the indication information is used to indicate the at least one candidate of reference signal configuration information selected by the terminal; and
receiving the reference signal configuration information transmitted, based on the indication information of the terminal, from the network side device.

Specifically, in the embodiments of the present application, after receiving multiple candidates of reference signal configuration information transmitted by the network side device, the terminal may select, based on its own measurement capabilities and model training/updating requirements, at least one candidate of reference signal configuration information from the multiple candidates of reference signal configuration information transmitted by the network side device, and then feed it back to the network side device. After receiving feedback information transmitted by the terminal, the network side device may transmit the corresponding reference signal configuration information to the terminal according to the terminal's selection.

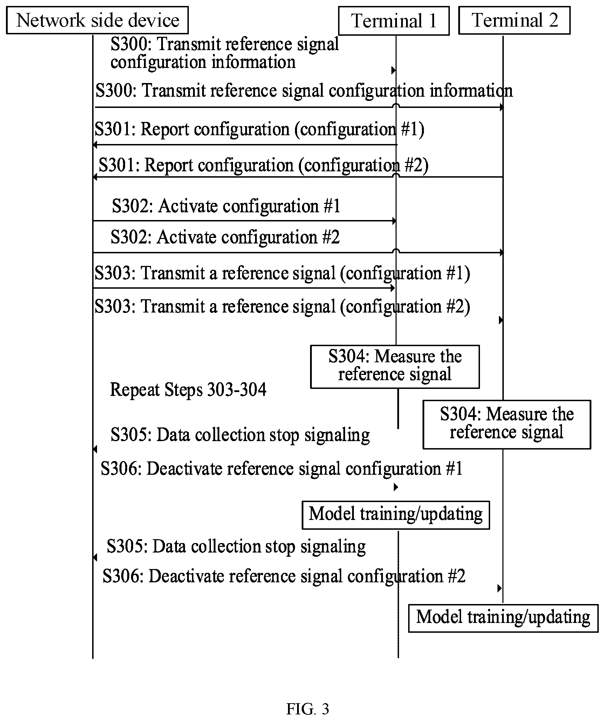

FIG. 3 is a third flowchart of a data collection method according to an embodiment of the present application. As shown in FIG. 3, the method includes:
Step 300: a network side device transmits supported multiple candidates of reference signal configuration information to each terminal.

For example, the network side device supports reference signal configuration #1 and reference signal configuration #2.

Reference signal configuration #1:
a second reference signal set: {CSI-RS reference signal 0, CSI-RS reference signal 1, ..., CSI-RS reference signal 31}, and time domain and frequency domain information of CSI-RS reference signals 0 to 31.
a first reference signal set and the second reference signal set are of subset relationship;
the first reference signal set: {CSI-RS reference signal 9, CSI-RS reference signal 13, CSI-RS reference signal 18, CSI-RS reference signal 22}.

Reference signal configuration #2:
a second reference signal set: {CSI-RS reference signal 0, CSI-RS reference signal 1, ..., CSI-RS reference signal 31};
a first reference signal set is different from the second reference signal set;
the first reference signal set: {SSB reference signal 0, SSB reference signal 1, ..., SSB reference signal 7}.

Step 301: the terminals feed back selected reference signal configuration information to the network side device.

For example, Terminal 1 selects reference signal configuration #1, while Terminal 2, which may train an AI model predicting 32 beams based on 8 wide beams, selects reference signal configuration #2.

Step 302: after receiving a feedback from the terminal, the network side device transmits a response to the terminal. The response may be an activation signaling.

For example, the network side device transmits activation information for reference signal configuration #1 to Terminal 1, and transmits activation information for reference signal configuration #2 to Terminal 2.

Step 303: the network side device transmits the reference signal corresponding to reference signal configuration #1 to Terminal 1, and transmits the reference signal corresponding to reference signal configuration #2 to Terminal 2.

Step 304: the terminal measures the reference signal based on received reference signal configuration information and obtains a measurement result.

Steps 303-304 are repeated until the terminal collects sufficient data.

For example, terminal 2 receives the reference signal according to reference signal configuration #2, and after collecting a certain amount of data (e.g., 30,000 data samples), transmits a data collection stop signaling to the network side device. The network side device then deactivates reference signal configuration #2. Each sample includes the L1-RSRP of {SSB reference signal 0, SSB reference signal 1, ..., SSB reference signal 7} and the L1-RSRP of {CSI-RS reference signal 0, CSI-RS reference signal 1, ..., CSI-RS reference signal 31}. The terminal uses the L1-RSRP of {SSB reference signal 0, SSB reference signal 1, ..., SSB reference signal 7} from these 30,000 samples as model input and the L1-RSRP of {CSI-RS reference signal 0, CSI-RS reference signal 1, ..., CSI-RS reference signal 31} as model output to train an AI model. The AI model may achieve beam quality prediction of the optimal beam in a set of 32 CSI-RS beams based on 8 SSB beams.

Step 305: the terminal transmits a data collection stop signaling to the network side device.

Step 306: after receiving the data collection stop signaling from the terminal, the network side device deactivates corresponding reference signal configuration information and stops transmitting reference signals.

The terminals perform model training or model updating based on collected data.

In the data collection method provided by the embodiments of the present application, after the terminal receives multiple candidates of reference signal configuration information transmitted by the network side device, the terminal may select appropriate reference signal configuration information according to its own situation and feed it back to the network side device. The network side device may then transmit corresponding reference signal to the terminal based on the terminal's selection. That is, different terminals may select reference signal configuration information suitable for their own capabilities and model training/updating requirements from the various reference signal configuration information provided by the network side device. The configuration result of the reference signal is jointly determined by the network side device and the terminals, effectively balancing the transmission overhead of the reference signal and the requirements of the terminals.

In an embodiment, receiving the reference signal configuration information transmitted, based on the indication information of the terminal, from the network side device includes:
transmitting the indication information to the network side device, where the indication information is used to indicate the reference signal configuration information requested by the terminal; and
receiving the reference signal configuration information transmitted, based on the indication information of the terminal, from the network side device.

Specifically, in the embodiments of the present application, the terminal first transmits, to the network side device, indication information indicating the reference signal configuration information requested by the terminal. After receiving requested reference signal configuration information, the network side device may transmit the reference signal configuration information to the terminal based on the terminal's request. In an embodiment, since the network side device needs to balance the requests of multiple terminals and the reference signal transmission overhead, the reference signal configuration information provided by the network side device to the terminal may be the same as or different from the reference signal configuration information requested by the terminals (e.g., reference signal period, transmission window duration), thereby effectively balancing the reference signal transmission overhead of the network side device and the requirements of the terminals.

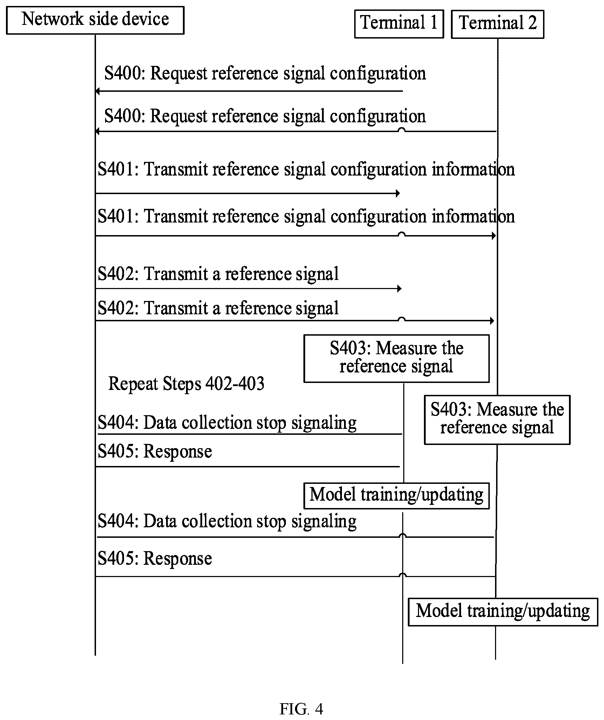

FIG. 4 is a fourth flowchart of a data collection method according to an embodiment of the present application. As shown in FIG. 4, the method includes:
Step 400: a terminal transmits a reference signal configuration request information to a network side device. The reference signal configuration request information includes:
(1) configuration information (such as time domain, frequency domain, sequence, power, etc.) of the reference signals in a first reference signal set (beam set Set B) used for an AI-based beam management model;
(2) configuration information (such as time domain, frequency domain, sequence, power, etc.) of the reference signals in a second reference signal set (beam set Set A) used for an AI-based beam management model;
(3) the relationship between the first reference signal set and/or the second reference signal set, such as subset relationship, equality relationship, or difference relationship.

In an embodiment, the information may include an identifier for the AI/ML model (e.g., model ID), an identifier for the AI/ML function (e.g., functionality ID), or a dataset ID, indicating that the terminal is requesting the reference signal corresponding to the model ID, functionality ID, or dataset ID. Furthermore, the terminal may also include a purpose of requesting the reference signal in request information. For example, if the terminal requests a reference signal for model training and also includes model ID #5, it indicates that the terminal is requesting reference signal configuration information identical to the training dataset for model ID #5.

For example, if the terminal needs to update the AI/ML model corresponding to model ID #5, the terminal transmits, to the network side device, a data collection request signaling carrying the model identifier (model ID #5).

After the terminal accesses a cell, it has already informed the network side device of the application conditions for model ID #5 through a model registration or model identification process, including:
a first reference signal set and a second reference signal set are of subset relationship;
the first reference signal set includes 4 reference signals; and
the second reference signal set includes 32 reference signals.

Step 401: after receiving the request information from the terminal, the network side device transmits reference signal configuration information to the terminal. The reference signal configuration information transmitted by the network side device may differ from the configuration information requested by the terminal. For example, the network side device may transmit more preferred reference signal configuration information based on the current network conditions.

For example, the network side device may transmit reference signal configuration information to the terminal based on the application conditions mentioned above during model registration or model identification for model ID#5.

Step 402: the network side device transmits a reference signal to the terminal.

Step 403: the terminal measures the reference signal based on received reference signal configuration information.

Steps 402-403 are repeated until the terminal collects sufficient data.

Step 404: the terminal transmits a data collection stop signaling to the network side device.

For example, the terminal receives the reference signal according to reference signal configuration information, and after collecting a certain amount of data (e.g., 5000 data samples), transmits a data collection stop signaling to the network side device. The network side device transmits an acknowledgment message to the terminal. The acknowledgment message may be a signaling to release the aforementioned reference signal configuration, indicating that the network side device will no longer transmit the reference signal corresponding to the aforementioned configuration information.

Step 405: after receiving the data collection stop signaling transmitted by the terminal, the network side device transmits a response message or acknowledgment message for the terminal data collection signaling to the terminal. The terminal performs model training or model updating based on collected data.

For example, the terminal updates the AI/ML model of model ID#5 based on collected 5000 data samples. Updated model is more suitable for the current channel environment, improving model performance.

In the data collection method provided by the embodiments of the present application, the terminal informs the network side device of its reference signal configuration requirements. The network side device transmits, based on the requirements of each terminal and the reference signal overhead, the final reference signal configuration information to the terminals, effectively balancing the reference signal transmission overhead of the network side device and the requirements of the terminals.

In an embodiment, the indication information includes at least one of following:
a quantity of reference signals in a first reference signal set;
a quantity of reference signals in a second reference signal set;
a relationship between a first reference signal set and a second reference signal set;
a model identifier;
a model function identifier;
a dataset identifier;
a requested data volume or a reference signal transmission window duration; or
a request reason or a request purpose.

Specifically, in the embodiments of the present application, the terminal may explicitly inform the network side device of its reference signal configuration requirements. For example, the reference signal configuration request information transmitted by the terminal to the network side device includes at least one of following: a quantity of reference signals in the first reference signal set, a quantity of reference signals in the second reference signal set and the relationship between the first reference signal set and the second reference signal set, a period of reference signals corresponding to the first reference signal set and/or the second reference signal set (the terminal may determine the transmission period based on its own movement speed), and a data volume or a reference signal transmission window duration of reference signals corresponding to the first reference signal set and/or the second reference signal set. In an embodiment, the terminal may also implicitly inform the network side device of its reference signal configuration requirements. For example, the reference signal configuration request information transmitted by the terminal to the network side device includes at least one of following: a model identifier (model ID), a model function identifier (functionality ID), a dataset identifier (dataset ID), a requested data volume or a reference signal transmission window duration, and a reason or a purpose of the request, indicating that the terminal requests a reference signal corresponding to the model identifier (model ID), the model function identifier (functionality ID), or the dataset identifier (dataset ID).

In the data collection method provided by the embodiments of the present application, the terminal may inform the network side device of its reference signal configuration requirements explicitly or implicitly, which allows for flexible and diverse implementations.

In an embodiment, receiving the reference signal configuration information transmitted, based on the indication information of the terminal, from the network side device includes:
receiving a radio resource control (RRC) message transmitted from the network side device, where the RRC message carries the reference signal configuration information.

Specifically, in the embodiments of the present application, after the terminal indicates requested reference signal configuration information to the network side device, the terminal may obtain the reference signal configuration information transmitted by the network side device based on the indication information of the terminal. In an embodiment, the network side device may transmit, to the terminal, a radio resource control (RRC) message carrying the reference signal configuration information.

In the data collection method provided by the embodiments of the present application, the network side device carries the reference signal configuration information based on existing RRC messages, which is simple to implement and saves signaling resource overhead.

In an embodiment, after obtaining the measurement result of the reference signal, the method further includes:
transmitting first information to the network side device, where the first information is used for requesting to stop reference signal transmission or deactivate reference signal configuration information; and
receiving second information transmitted from the network side device, where the second information is used to indicate the network side device deactivating the reference signal configuration information or indicate the terminal stopping receiving reference signals.

Specifically, in the embodiments of the present application, after the terminal obtains the measurement result of the reference signal, that is, after the terminal completes the collection of training data, the terminal may transmit first information to the network side device to inform the network side device that the data collection has been completed, and request the network side device to stop transmitting the reference signal or to deactivate the reference signal configuration information. Upon receiving the first information from the terminal, the network side device may know that the terminal has completed the collection of training data. The network side device may then inform the terminal that it deactivated the reference signal configuration information or the network side device may indicate the terminal stopping receiving the reference signal. In an embodiment, the network side device may also transmit a timer to the terminal to inform the terminal that the reference signal configuration information will be deactivated or to stop receiving the reference signal after the timer expires.

In the data collection method provided by the embodiments of the present application, by informing the network side device that the terminal has completed the collection of training data, the network side device may promptly deactivate the reference signal configuration information or stop the transmission of the reference signal, effectively saving the transmission overhead of the reference signal.

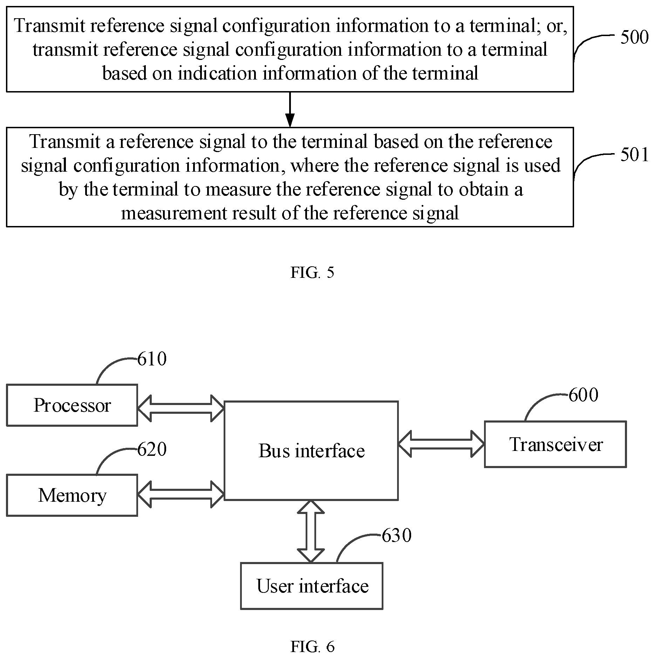

FIG. 5 is a flowchart of a reference signal transmission method according to an embodiment of the present application. As shown in FIG. 5, the method may be performed by a network side device, the method includes:
Step 500: transmitting reference signal configuration information to a terminal; or, transmitting reference signal configuration information to a terminal based on indication information of the terminal.

Specifically, in the embodiments of the present application, the network side device may transmit reference signal configuration information to the terminal in various ways. For example, the network side device may directly transmit the reference signal configuration information to the terminal, and the network side device may also transmit the reference signal configuration information to the terminal based on the indication information transmitted from the terminal.

Step 501: transmitting a reference signal to the terminal based on the reference signal configuration information, where the terminal may measure the reference signal to obtain a measurement result of the reference signal.

Specifically, after the network side device transmits the reference signal configuration information to the terminal, it may transmit the reference signal based on the reference signal configuration information. The terminal may then measure the reference signal based on received reference signal configuration information and use the measurement result for model training, updating, and monitoring.

In the data transmission method provided by the embodiments of the present application, the network side device may directly transmit the reference signal configuration information to the terminal, or it may transmit the reference signal configuration information to the terminal based on the indication information of the terminal, effectively balancing the reference signal transmission overhead of the network side device and the requirements of the terminal. In addition, after the network side device transmits the reference signal configuration information to the terminal, the network side device may transmit the reference signal based on the reference signal configuration information. The terminal may then measure the reference signal based on received reference signal configuration information, and use the measurement result of the reference signal to perform model training, updating and monitoring. This enables the collection of model training data without requiring the network side device to transmit the reference signal on all transmit beams, and without requiring the terminal to measure the reference signal on all beams, thus reducing the reference signal resource overhead of the network side device, the measurement overhead of the terminal and the measurement latency of the terminal.

In an embodiment, the reference signal configuration information includes at least one of following:
configuration information of reference signals in a first reference signal set, where measurement results of the reference signals in the first reference signal set are used as input data for model training, model updating, or model monitoring;
configuration information of reference signals in a second reference signal set, where measurement results of the reference signals in the second reference signal set are used as label information for model training, model updating, or model monitoring;
a relationship between a first reference signal set and a second reference signal set; or
pattern information of a first reference signal set.

Specifically, when training AI/ML models, it is necessary to obtain input data and label information. In the embodiments of the present application, the measurement results of the reference signals in the first reference signal set are used as input data for model training, model updating, or model monitoring. The measurement results of the reference signals in the second reference signal set are used as label information for model training, model updating, or model monitoring. During implementation, beam quality refers to the quality of reference signals transmitted on that beam. The first reference signal set represents beam set Set B, and the second reference signal set represents beam set Set A.

In an embodiment, the relationship between the first reference signal set and the second reference signal set includes: the first reference signal set is a subset of the second reference signal set; the first reference signal set and second reference signal set are equal; the beam corresponding to any reference signal in the first reference signal set is different from the beam corresponding to any reference signal in the second reference signal set; and the spatial reception parameter corresponding to any reference signal in the first reference signal set and the spatial reception parameter corresponding to any reference signal in the second reference signal set are different. The pattern information of the first reference signal set is used to indicate the reference signals included in the first reference signal set that the terminal needs to measure. In an embodiment, when the first reference signal set and the second reference signal set are equal, the reference signal configuration information may only configure the first reference signal set or the second reference signal set. When the first reference signal set is a subset of the second reference signal set, the reference signal configuration information may not carry the configuration information of the reference signals in the first reference signal set or the pattern information of the first reference signal set, and the terminal may independently determine the reference signals to be measured in the first reference signal set based on the measurement results of the reference signals in the second reference signal set. Thus, it enables the terminal to flexibly obtain the configuration information of the reference signals to be measured in various ways.

In the data collection method provided by the embodiments of the present application, the reference signal configuration information includes one or more of configuration information of reference signals in the first reference signal set, configuration information of reference signals in the second reference signal set, the relationship between the first reference signal set and the second reference signal set, and pattern information of the first reference signal set. This allows the terminal to flexibly obtain the configuration information of the reference signals to be measured in various ways, and thus collect the input data and label information required for model training, so as to complete the training, monitoring and updating of the model on the terminal side.

In an embodiment, the configuration information includes at least one of following: time domain information, frequency domain information, sequence information, and power information of a reference signal.

Specifically, in the embodiments of the present disclosure, the time domain information, frequency domain information, sequence information, and power information of the reference signal to be measured are indicated to the terminal through the configuration information of the reference signal in the first reference signal set and the configuration information of the reference signal in the second reference signal set. This enables the terminal to accurately measure the reference signal based on the configuration information, to obtain the measurement result of the reference signal, and perform the training, monitoring and updating of the model.

In an embodiment, transmitting the reference signal configuration information to the terminal includes:
transmitting a system message to the terminal, where the system message carries the reference signal configuration information.

Specifically, in the embodiments of the present disclosure, the network side device may autonomously transmit reference signal configuration information to the terminal, allowing the terminal to directly obtain the reference signal configuration information and measure the reference signal. In an embodiment, the network side device may broadcast the reference signal configuration information to each terminal via system messages. That is, the network side device autonomously determines the reference signal configuration and provides the same reference signal configuration information to all terminals. After receiving the reference signal configuration information carried in the system message, the terminal may measure the reference signal as needed for data collection and model training. In the above method, the network side device utilizes system messages to carry reference signal configuration information. The implementation is simple to implement, offering higher efficiency in configuring the reference signal, and effectively saves signaling resource overhead and reference signal transmission overhead.

In an embodiment, transmitting the reference signal configuration information to the terminal based on the indication information of the terminal includes:
transmitting multiple candidates of reference signal configuration information to the terminal;
receiving the indication information transmitted from the terminal, where the indication information is used to indicate at least one candidate of reference signal configuration information selected by the terminal from the multiple candidates of reference signal configuration information; and
transmitting the reference signal configuration information to the terminal based on the indication information of the terminal.

Specifically, in the embodiments of the present application, after the network side device transmits supported multiple candidates of reference signal configuration information to the terminal, the terminal may select, based on its own measurement capabilities and model training/updating requirements, at least one candidate of reference signal configuration information from the multiple candidates of reference signal configuration information transmitted by the network side device, and then feed it back to the network side device. After receiving feedback information transmitted by the terminal, the network side device may transmit the corresponding reference signal configuration information to the terminal according to the terminal's selection.

In the data transmission method provided by the embodiments of the present application, the network side device provides the terminal with multiple candidates of optional reference signal configuration information, the terminal may select appropriate reference signal configuration information according to its own situation and feed it back to the network side device. The network side device may then transmit corresponding reference signal to the terminal based on the terminal's selection. That is, different terminals may select reference signal configuration information suitable for their own capabilities and model training/updating requirements from the various reference signal configuration information provided by the network side device. The configuration result of the reference signal is jointly determined by the network side device and the terminals, effectively balancing the transmission overhead of the reference signal and the requirements of the terminals.

In an embodiment, transmitting the reference signal configuration information to the terminal based on the indication information of the terminal includes:
receiving the indication information transmitted from the terminal, where the indication information is used to indicate the reference signal configuration information requested by the terminal; and
transmitting the reference signal configuration information to the terminal based on the indication information of the terminal.

Specifically, in the embodiments of the present application, after receiving the indication information from the terminal and learning the reference signal configuration information requested by the terminal, the network side device may transmit the reference signal configuration information to the terminal based on the terminal's request. In an embodiment, since the network side device needs to balance the requests of multiple terminals and the reference signal transmission overhead, the reference signal configuration information provided by the network side device to the terminal may be the same as or different from the reference signal configuration information requested by the terminals (e.g., reference signal period, transmission window duration), thereby effectively balancing the reference signal transmission overhead of the network side device and the requirements of the terminals.

In an embodiment, the indication information includes at least one of following:
a quantity of reference signals in a first reference signal set;
a quantity of reference signals in a second reference signal set;
a relationship between a first reference signal set and a second reference signal set;
a model identifier;
a model function identifier;
a dataset identifier;
a requested data volume or a reference signal transmission window duration; or
a request reason or a request purpose.

Specifically, in the embodiments of the present application, the network side device may obtain the terminal's reference signal configuration requirement through the configuration information explicitly transmitted by the terminal. For example, the reference signal configuration request information received by the network side device includes at least one of following: a quantity of reference signals in the first reference signal set, a quantity of reference signals in the second reference signal set and the relationship between the first reference signal set and the second reference signal set, a period of reference signals corresponding to the first reference signal set and/or the second reference signal set (the terminal may determine the transmission period based on its own movement speed), and a data volume or a reference signal transmission window duration of reference signals corresponding to the first reference signal set and/or the second reference signal set. In an embodiment, the network side device may obtain the terminal's reference signal configuration requirement through the configuration information implicitly transmitted by the terminal. For example, the reference signal configuration request information received by the network side device includes at least one of following: a model identifier (model ID), a model function identifier (functionality ID), a dataset identifier (dataset ID), a requested data volume or a reference signal transmission window duration, and a reason or a purpose of the request, indicating that the terminal requests a reference signal corresponding to the model identifier (model ID), the model function identifier (functionality ID), the dataset identifier (dataset ID).

In the data transmission method provided by the embodiments of the present application, the network side device may obtain the reference signal configuration requirements of the terminal through the configuration information transmitted explicitly or implicitly by the terminal, which allows for flexible and diverse implementations.

In an embodiment, transmitting the reference signal configuration information to the terminal based on the indication information of the terminal includes:
transmitting a radio resource control (RRC) message to the terminal, where the RRC message carries the reference signal configuration information.

Specifically, in the embodiments of the present application, after receiving the indication information from the terminal, the network side device may transmit the reference signal configuration information to the terminal based on the indication information of the terminal. In an embodiment, the network side device may transmit, to the terminal, a radio resource control (RRC) message carrying the reference signal configuration information.

In the data transmission method provided by the embodiments of the present application, the network side device carries the reference signal configuration information based on existing RRC messages, which is simple to implement and saves signaling resource overhead.

In an embodiment, after transmitting the reference signal to the terminal based on the reference signal configuration information, the method further includes:
receiving first information transmitted from the terminal, where the first information is used for requesting to stop reference signal transmission or deactivate reference signal configuration information; and
transmitting second information to the terminal, where the second information is used to indicate the network side device deactivating the reference signal configuration information or indicate the terminal stopping receiving reference signals.

Specifically, in the embodiments of the present application, after the network side device transmits a reference signal to the terminal, if the network side device receives first information transmitted from the terminal, it may know that the terminal has completed the collection of training data. The network side device may then inform the terminal that it deactivated the reference signal configuration information or the network side device may indicate the terminal stopping receiving the reference signal. In an embodiment, the network side device may also transmit a timer to the terminal to inform the terminal that the reference signal configuration information will be deactivated or to stop receiving the reference signal after the timer expires.

In the data transmission method provided by the embodiments of the present application, by receiving the first information transmitted by the terminal, the network-side device may know that the terminal has completed the collection of training data. Therefore, the network side device may promptly deactivate the reference signal configuration information or stop the transmission of the reference signal, effectively saving the transmission overhead of the reference signal.

The methods and apparatuses provided by the various embodiments of the present application are based on the same concept. Since the principles by which the methods and apparatuses solve the problem are similar, the implementation of the apparatus and the methods may be referred to each other, and duplicate details will not be described again.

FIG. 6 is a structural diagram of a terminal according to an embodiment of the present application. As shown in FIG. 6, the terminal includes a memory 620, a transceiver 610, and a processor 600, where the processor 600 and the memory 620 may be physically separated.

The memory 620 is used for storing a computer program, the transceiver 610 is used for receiving and transmitting data under control of the processor 600.

Specifically, the transceiver 610 is used to receive and transmit data under the control of the processor 600.

In FIG. 6, a bus architecture may include any quantity of interconnected buses and bridges, which are linked together through various circuits of one or more processors represented by processor 600 and one or more memories represented by the memory 620. The bus architecture may also link together various other circuits, such as peripherals, voltage regulators, and power management circuits. These are well known in the art and therefore will not be described further in the present application. The bus interface provides an interface. The transceiver 610 may be multiple elements, i.e., including a transmitter and a receiver, providing units for communication with various other devices over transmission media including wireless channels, wired channels, fiber optic cables, and the like. The processor 600 is responsible for managing the bus architecture and general processing, and the memory 620 may store data used by the processor 600 when performing operations.

The processor 600 may be a central processing unit (CPU), an application specific integrated circuit (ASIC), a field programmable gate array (FPGA), or a complex programmable logic device (CPLD), and the processor may also adopt a multi-core architecture.

The processor 600 calls a computer program stored in the memory 620 and execute any of the methods provided by the embodiments of the present application according to obtained executable instructions. The methods include: measuring a reference signal transmitted by a network side device according to reference signal configuration information, to obtain a measurement result of the reference signal,
where the reference signal configuration information is obtained through at least one of following:
receiving the reference signal configuration information transmitted from the network side device; or
receiving the reference signal configuration information transmitted, based on indication information of the terminal, from the network side device.

In an embodiment, the reference signal configuration information includes at least one of following:
configuration information of reference signals in a first reference signal set, where measurement results of the reference signals in the first reference signal set are used as input data for model training, model updating, or model monitoring;
configuration information of reference signals in a second reference signal set, where measurement results of the reference signals in the second reference signal set are used as label information for model training, model updating, or model monitoring;
a relationship between a first reference signal set and a second reference signal set; or
pattern information of a first reference signal set.

In an embodiment, the configuration information includes at least one of following:
time domain information, frequency domain information, sequence information, and power information of a reference signal.

In an embodiment, the relationship between the first reference signal set and the second reference signal set includes at least one of following:
the first reference signal set is a subset of the second reference signal set;
the first reference signal set is equal to the second reference signal set;
a beam corresponding to any reference signal in the first reference signal set is different from a beam corresponding to any reference signal in the second reference signal set; or
a spatial reception parameter corresponding to any reference signal in the first reference signal set is different from a spatial reception parameter corresponding to any reference signal in the second reference signal set.

In an embodiment, receiving the reference signal configuration information transmitted from the network side device includes:
receiving a system message transmitted from the network side device, where the system message carries the reference signal configuration information.

In an embodiment, receiving the reference signal configuration information transmitted, based on the indication information of the terminal, from the network side device includes:
receiving multiple candidates of reference signal configuration information transmitted from the network side device;
selecting at least one candidate of reference signal configuration information from the multiple candidates of reference signal configuration information;
transmitting the indication information to the network side device, where the indication information is used to indicate the at least one candidate of reference signal configuration information selected by the terminal; and
receiving the reference signal configuration information transmitted, based on the indication information of the terminal, from the network side device.

In an embodiment, receiving the reference signal configuration information transmitted, based on the indication information of the terminal, from the network side device includes:
transmitting the indication information to the network side device, where the indication information is used to indicate the reference signal configuration information requested by the terminal; and
receiving the reference signal configuration information transmitted, based on the indication information of the terminal, from the network side device.

In an embodiment, the indication information includes at least one of following:
a quantity of reference signals in a first reference signal set;
a quantity of reference signals in a second reference signal set;
a relationship between a first reference signal set and a second reference signal set;
a model identifier;
a model function identifier;
a dataset identifier;
a requested data volume or a reference signal transmission window duration; or
a request reason or a request purpose.

In an embodiment, receiving the reference signal configuration information transmitted, based on the indication information of the terminal, from the network side device includes:
receiving a radio resource control (RRC) message transmitted from the network side device, where the RRC message carries the reference signal configuration information.

In an embodiment, the method further includes:
transmitting first information to the network side device, where the first information is used for requesting to stop reference signal transmission or deactivate reference signal configuration information; and
receiving second information transmitted from the network side device, where the second information is used to indicate the network side device deactivating the reference signal configuration information or indicate the terminal stopping receiving reference signals.

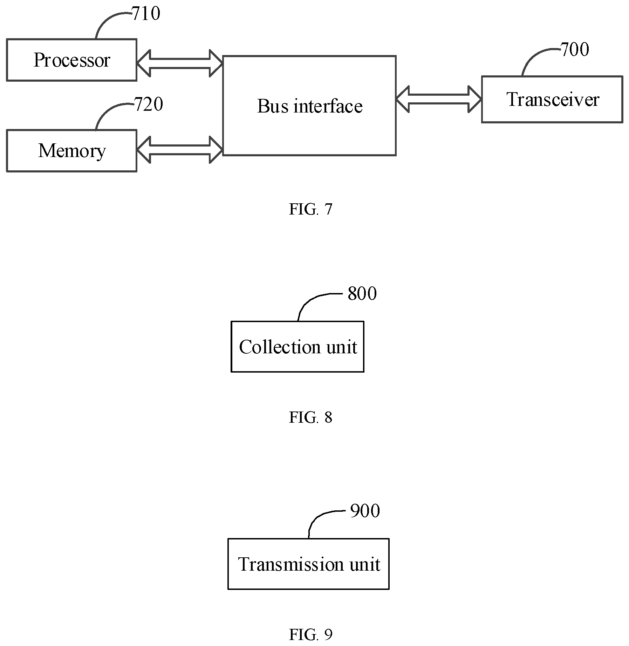

FIG. 7 is a structural diagram of a network side device according to an embodiment of the present application. As shown in FIG. 7, the network side device includes a memory 720, a transceiver 710, and a processor 700, where the processor 700 and the memory 720 may be physically separated.

The memory 720 is used for storing a computer program, the transceiver 710 is used for receiving and transmitting data under control of the processor 700.

Specifically, the transceiver 710 is used to receive and transmit data under the control of the processor 700.

In FIG. 7, a bus architecture may include any quantity of interconnected buses and bridges, which are linked together through various circuits of one or more processors represented by processor 700 and one or more memories represented by the memory 720. The bus architecture may also link together various other circuits, such as peripherals, voltage regulators, and power management circuits. These are well known in the art and therefore will not be described further in the present application. The bus interface provides an interface. The transceiver 710 may be multiple elements, i.e., including a transmitter and a receiver, providing units for communication with various other devices over transmission media including wireless channels, wired channels, fiber optic cables, and the like. The processor 700 is responsible for managing the bus architecture and general processing, and the memory 720 may store data used by the processor 700 when performing operations.

The processor 700 may be a CPU, ASIC, FPGA or CPLD, and the processor may also adopt a multi-core architecture.

The processor 700 calls a computer program stored in the memory 720 and execute any of the methods provided by the embodiments of the present application according to obtained executable instructions. The methods include: transmitting reference signal configuration information to a terminal, or transmitting reference signal configuration information to a terminal based on indication information of the terminal; transmitting a reference signal to the terminal based on the reference signal configuration information, where the reference signal is used for the terminal to measure the reference signal to obtain a measurement result of the reference signal.

In an embodiment, the reference signal configuration information includes at least one of following:
configuration information of reference signals in a first reference signal set, where measurement results of the reference signals in the first reference signal set are used as input data for model training, model updating, or model monitoring;
configuration information of reference signals in a second reference signal set, where measurement results of the reference signals in the second reference signal set are used as label information for model training, model updating, or model monitoring;
a relationship between a first reference signal set and a second reference signal set; or
pattern information of a first reference signal set.

In an embodiment, the configuration information includes at least one of following:
time domain information, frequency domain information, sequence information, and power information of a reference signal.

In an embodiment, the relationship between the first reference signal set and the second reference signal set includes at least one of following:
the first reference signal set is a subset of the second reference signal set;
the first reference signal set is equal to the second reference signal set;
a beam corresponding to any reference signal in the first reference signal set is different from a beam corresponding to any reference signal in the second reference signal set; or
a spatial reception parameter corresponding to any reference signal in the first reference signal set is different from a spatial reception parameter corresponding to any reference signal in the second reference signal set.

In an embodiment, transmitting the reference signal configuration information to the terminal includes:
transmitting a system message to the terminal, where the system message carries the reference signal configuration information.

In an embodiment, transmitting the reference signal configuration information to the terminal based on the indication information of the terminal includes:
transmitting multiple candidates of reference signal configuration information to the terminal;
receiving the indication information transmitted from the terminal, where the indication information is used to indicate at least one candidate of reference signal configuration information selected by the terminal from the multiple candidates of reference signal configuration information; and
transmitting the reference signal configuration information to the terminal based on the indication information of the terminal.

In an embodiment, transmitting the reference signal configuration information to the terminal based on the indication information of the terminal includes:
receiving the indication information transmitted from the terminal, where the indication information is used to indicate the reference signal configuration information requested by the terminal; and
transmitting the reference signal configuration information to the terminal based on the indication information of the terminal.

In an embodiment, the indication information includes at least one of following:
a quantity of reference signals in a first reference signal set;
a quantity of reference signals in a second reference signal set;
a relationship between a first reference signal set and a second reference signal set;
a model identifier;
a model function identifier;
a dataset identifier;
a requested data volume or a reference signal transmission window duration; or
a request reason or a request purpose.

In an embodiment, transmitting the reference signal configuration information to the terminal based on the indication information of the terminal includes:
transmitting a radio resource control (RRC) message to the terminal, where the RRC message carries the reference signal configuration information.

In an embodiment, the method further includes:
receiving first information transmitted from the terminal, where the first information is used for requesting to stop reference signal transmission or deactivate reference signal configuration information; and
transmitting second information to the terminal, where the second information is used to indicate the network side device deactivating the reference signal configuration information or indicate the terminal stopping receiving reference signals.

It should be noted here that the terminal and the network side device provided by the embodiments of the present application may implement all the method steps implemented by the method embodiments, and may achieve the same effects. The same parts and beneficial effects in the embodiments as those in the method embodiments are not described in detail herein.

FIG. 8 is a structural diagram of a data collection apparatus according to an embodiment of the present application. The apparatus may be used in a terminal, and as shown in FIG. 8, the apparatus includes:
a collection unit 800, used for measuring a reference signal transmitted by a network side device according to reference signal configuration information, to obtain a measurement result of the reference signal,
where the reference signal configuration information is obtained through at least one of following:
   receiving the reference signal configuration information transmitted from the network side device; or
   receiving the reference signal configuration information transmitted, based on indication information of the terminal, from the network side device.

In an embodiment, the reference signal configuration information includes at least one of following:
configuration information of reference signals in a first reference signal set, where measurement results of the reference signals in the first reference signal set are used as input data for model training, model updating, or model monitoring;
configuration information of reference signals in a second reference signal set, where measurement results of the reference signals in the second reference signal set are used as label information for model training, model updating, or model monitoring;
a relationship between a first reference signal set and a second reference signal set; or
pattern information of a first reference signal set.

In an embodiment, the configuration information includes at least one of following:
time domain information, frequency domain information, sequence information, and power information of a reference signal.

In an embodiment, the relationship between the first reference signal set and the second reference signal set includes at least one of following:
the first reference signal set is a subset of the second reference signal set;
the first reference signal set is equal to the second reference signal set;
a beam corresponding to any reference signal in the first reference signal set is different from a beam corresponding to any reference signal in the second reference signal set; or
a spatial reception parameter corresponding to any reference signal in the first reference signal set is different from a spatial reception parameter corresponding to any reference signal in the second reference signal set.

In an embodiment, the collection unit 800 is used for receiving a system message transmitted from the network side device, where the system message carries the reference signal configuration information.

In an embodiment, the collection unit 800 is used for receiving multiple candidates of reference signal configuration information transmitted from the network side device, and selecting at least one candidate of reference signal configuration information from the multiple candidates of reference signal configuration information.

In an embodiment, the apparatus further includes a transmission unit 810, the transmission unit 810 is used for transmitting the indication information to the network side device, where the indication information is used to indicate the at least one candidate of reference signal configuration information selected by the terminal.

The collection unit 800 is used for receiving the reference signal configuration information transmitted, based on the indication information of the terminal, from the network side device.

In an embodiment, the transmission unit 810 is used for transmitting the indication information to the network side device, where the indication information is used to indicate the reference signal configuration information requested by the terminal.

The collection unit 800 is used for receiving the reference signal configuration information transmitted, based on the indication information of the terminal, from the network side device.

In an embodiment, the indication information includes at least one of following:
a quantity of reference signals in a first reference signal set;
a quantity of reference signals in a second reference signal set;
a relationship between a first reference signal set and a second reference signal set;
a model identifier;
a model function identifier;
a dataset identifier;
a requested data volume or a reference signal transmission window duration; or
a request reason or a request purpose.

In an embodiment, the collection unit 800 is used for receiving a radio resource control (RRC) message transmitted from the network side device, where the RRC message carries the reference signal configuration information.

In an embodiment, the transmission unit 810 is used for transmitting first information to the network side device, where the first information is used for requesting to stop reference signal transmission or deactivate reference signal configuration information.

The collection unit 800 is used for receiving second information transmitted from the network side device, the second information being used to indicate the network side device deactivating the reference signal configuration information or indicate the terminal stopping receiving reference signals.

FIG. 9 is a structural diagram of a reference signal transmission apparatus according to an embodiment of the present application. The apparatus may be used in a network side device, and as shown in FIG. 9, the apparatus includes:
a transmission unit 900, used for transmitting reference signal configuration information to a terminal; or, transmitting reference signal configuration information to a terminal based on indication information of the terminal; and
transmitting a reference signal to the terminal based on the reference signal configuration information, where the reference signal is used for the terminal to measure the reference signal to obtain a measurement result of the reference signal.

In an embodiment, the reference signal configuration information includes at least one of following:
configuration information of reference signals in a first reference signal set, where measurement results of the reference signals in the first reference signal set are used as input data for model training, model updating, or model monitoring;
configuration information of reference signals in a second reference signal set, where measurement results of the reference signals in the second reference signal set are used as label information for model training, model updating, or model monitoring;
a relationship between a first reference signal set and a second reference signal set; or
pattern information of a first reference signal set.

In an embodiment, the configuration information includes at least one of following:
time domain information, frequency domain information, sequence information, and power information of a reference signal.

In an embodiment, the relationship between the first reference signal set and the second reference signal set includes at least one of following:
the first reference signal set is a subset of the second reference signal set;
the first reference signal set is equal to the second reference signal set;
a beam corresponding to any reference signal in the first reference signal set is different from a beam corresponding to any reference signal in the second reference signal set; or
a spatial reception parameter corresponding to any reference signal in the first reference signal set is different from a spatial reception parameter corresponding to any reference signal in the second reference signal set.

In an embodiment, the transmission unit 900 is used for transmitting a system message to the terminal, where the system message carries the reference signal configuration information.

In an embodiment, the transmission unit 900 is used for transmitting multiple candidates of reference signal configuration information to the terminal.

The apparatus further includes a receiving unit 910, the receiving unit 910 is used for receiving the indication information transmitted from the terminal, where the indication information is used to indicate at least one candidate of reference signal configuration information selected by the terminal from the multiple candidates of reference signal configuration information.

The transmission unit 900 is used for transmitting the reference signal configuration information to the terminal based on the indication information of the terminal.

In an embodiment, the receiving unit 910 is used for receiving the indication information transmitted from the terminal, where the indication information is used to indicate the reference signal configuration information requested by the terminal.

The transmission unit 900 is used for transmitting the reference signal configuration information to the terminal based on the indication information of the terminal.

In an embodiment, the indication information includes at least one of following:
a quantity of reference signals in a first reference signal set;
a quantity of reference signals in a second reference signal set;
a relationship between a first reference signal set and a second reference signal set;
a model identifier;
a model function identifier;
a dataset identifier;
a requested data volume or a reference signal transmission window duration; or
a request reason or a request purpose.

In an embodiment, the transmission unit 900 is used for transmitting a radio resource control (RRC) message to the terminal, where the RRC message carries the reference signal configuration information.

In an embodiment, the receiving unit 910 is used for receiving first information transmitted from the terminal, where the first information is used for requesting to stop reference signal transmission or deactivate reference signal configuration information.

The transmission unit 900 is used for transmitting second information to the terminal, the second information being used to indicate the network side device deactivating the reference signal configuration information or indicate the terminal stopping receiving reference signals.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a computer readable storage medium. Based on such understanding, the solutions of the present application in essence or a part of the solutions that contributes to the related art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as U disk, mobile hard disk, read-only memory (ROM), random access memory (RAM), magnetic disk, or optical disk.

It should be noted here that the above apparatus provided in the embodiments of the present application may implement all the method steps implemented by the above method embodiments, and may achieve the same effects. The same parts and beneficial effects in the embodiments as those in the method embodiments are not described in detail herein.

An embodiment of the present application also provides a processor readable storage medium storing a computer program for causing the processor to execute the data collection methods provided by the above embodiments. The methods include: measuring a reference signal transmitted by a network side device according to reference signal configuration information, to obtain a measurement result of the reference signal,
where the reference signal configuration information is obtained through at least one of following:
receiving the reference signal configuration information transmitted from the network side device; or
receiving the reference signal configuration information transmitted, based on indication information of the terminal, from the network side device.

An embodiment of the present application further provides a processor readable storage medium storing a computer program for causing the processor to execute the reference signal transmission methods provided by the above embodiments. The methods include: transmitting reference signal configuration information to a terminal, or transmitting reference signal configuration information to a terminal based on indication information of the terminal; transmitting a reference signal to the terminal based on the reference signal configuration information, where the reference signal is used for the terminal to measure the reference signal to obtain a measurement result of the reference signal.

The processor readable storage medium may be any available medium or data storage device that may be accessed by the processor, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

As will be appreciated by those skilled in the art, embodiments of the present application may be provided as methods, systems, or computer program products. Therefore, the present application may take the form of an entirely hardware embodiment, an entirely software embodiment, or an embodiment combining software and hardware. Moreover, the present application may take the form of a computer program product implemented on one or more computer-usable storage media having computer-usable program code, including but not limited to disk storage and optical storage, etc.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general-purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor readable memory capable of directing a computer or other programmable data processing apparatus to operate in a particular manner, and the instructions stored in the processor readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A data collection method, performed by a terminal, comprising:
measuring a reference signal transmitted from a network side device according to reference signal configuration information, to obtain a measurement result of the reference signal,
wherein the reference signal configuration information is obtained through at least one of following:
receiving the reference signal configuration information transmitted from the network side device; or
receiving the reference signal configuration information transmitted, based on indication information of the terminal, from the network side device.

2. The data collection method of claim 1, wherein the reference signal configuration information comprises at least one of following:
configuration information of reference signals in a first reference signal set, wherein measurement results of the reference signals in the first reference signal set are used as input data for model training, model updating, or performance monitoring;
configuration information of reference signals in a second reference signal set, wherein measurement results of the reference signals in the second reference signal set are used as label information for model training, model updating, or performance monitoring;
a relationship between a first reference signal set and a second reference signal set; or
pattern information of a first reference signal set.

3. The data collection method of claim 2, wherein the configuration information comprises at least one of following:
time domain information, frequency domain information, sequence information, or power information of the reference signal.

4. The data collection method of claim 2, wherein the relationship between the first reference signal set and the second reference signal set comprises at least one of following:
the first reference signal set is a subset of the second reference signal set;
the first reference signal set is equal to the second reference signal set;
a beam corresponding to any reference signal in the first reference signal set is different from a beam corresponding to any reference signal in the second reference signal set; or
a spatial reception parameter corresponding to any reference signal in the first reference signal set is different from a spatial reception parameter corresponding to any reference signal in the second reference signal set.

5. The data collection method of any of claims 1 to 4, wherein receiving the reference signal configuration information transmitted from the network side device comprises:
receiving a system message transmitted from the network side device, wherein the system message carries the reference signal configuration information.

6. The data collection method of any of claims 1 to 4, wherein receiving the reference signal configuration information transmitted, based on the indication information of the terminal, from the network side device comprises:
receiving multiple candidates of reference signal configuration information transmitted from the network side device;
selecting at least one candidate of reference signal configuration information from the multiple candidates of reference signal configuration information;
transmitting the indication information to the network side device, wherein the indication information is used to indicate the at least one candidate of reference signal configuration information selected by the terminal; and
receiving the reference signal configuration information transmitted, based on the indication information of the terminal, from the network side device.

7. The data collection method of any of claims 1 to 4, wherein receiving the reference signal configuration information transmitted, based on the indication information of the terminal, from the network side device comprises:
transmitting the indication information to the network side device, wherein the indication information is used to indicate the reference signal configuration information requested by the terminal; and
receiving the reference signal configuration information transmitted, based on the indication information of the terminal, from the network side device.

8. The data collection method of claim 7, wherein the indication information comprises at least one of following:
a quantity of reference signals in a first reference signal set;
a quantity of reference signals in a second reference signal set;
a relationship between a first reference signal set and a second reference signal set;
a model identifier;
a model function identifier;
a dataset identifier;
a requested data volume or a reference signal transmission window duration; or
a request reason or a request purpose.

9. The data collection method of claim 6 or 7, wherein receiving the reference signal configuration information transmitted, based on the indication information of the terminal, from the network side device comprises:
receiving a radio resource control (RRC) message transmitted from the network side device, wherein the RRC message carries the reference signal configuration information.

10. The data collection method of claim 6 or 7, wherein after obtaining the measurement result of the reference signal, the method further comprises:
transmitting first information to the network side device, wherein the first information is used for requesting to stop reference signal transmission or deactivate reference signal configuration information; and
receiving second information transmitted from the network side device, wherein the second information is used to indicate the network side device deactivating the reference signal configuration information or indicate the terminal stopping receiving reference signals.

11. A reference signal transmission method, performed by a network side device, comprising:
transmitting reference signal configuration information to a terminal; or, transmitting reference signal configuration information to a terminal based on indication information of the terminal; and
transmitting a reference signal to the terminal based on the reference signal configuration information, wherein the reference signal is used to measure the reference signal to obtain a measurement result of the reference signal.

12. The reference signal transmission method of claim 11, wherein the reference signal configuration information comprises at least one of following:
configuration information of reference signals in a first reference signal set, wherein measurement results of the reference signals in the first reference signal set are used as input data for model training, model updating, or performance monitoring;
configuration information of reference signals in a second reference signal set, wherein measurement results of the reference signals in the second reference signal set are used as label information for model training, model updating, or performance monitoring;
a relationship between a first reference signal set and a second reference signal set; or
pattern information of a first reference signal set.

13. The reference signal transmission method of claim 12, wherein the configuration information comprises at least one of following:
time domain information, frequency domain information, sequence information, or power information of the reference signal.

14. The reference signal transmission method of claim 12, wherein the relationship between the first reference signal set and the second reference signal set comprises at least one of following:
the first reference signal set is a subset of the second reference signal set;
the first reference signal set is equal to the second reference signal set;
a beam corresponding to any reference signal in the first reference signal set is different from a beam corresponding to any reference signal in the second reference signal set; or
a spatial reception parameter corresponding to any reference signal in the first reference signal set is different from a spatial reception parameter corresponding to any reference signal in the second reference signal set.

15. The reference signal transmission method of any of claims 11 to 14, wherein transmitting the reference signal configuration information to the terminal comprises:
transmitting a system message to the terminal, wherein the system message carries the reference signal configuration information.

16. The reference signal transmission method of any of claims 11 to 14, wherein transmitting the reference signal configuration information to the terminal based on the indication information of the terminal comprises:
transmitting multiple candidates of reference signal configuration information to the terminal;
receiving the indication information transmitted from the terminal, wherein the indication information is used to indicate at least one candidate of reference signal configuration information selected by the terminal from the multiple candidates of reference signal configuration information; and
transmitting the reference signal configuration information to the terminal based on the indication information of the terminal.

17. The reference signal transmission method of any of claim 11 to 14, wherein transmitting the reference signal configuration information to the terminal based on the indication information of the terminal comprises:
receiving the indication information transmitted from the terminal, wherein the indication information is used to indicate the reference signal configuration information requested by the terminal; and
transmitting the reference signal configuration information to the terminal based on the indication information of the terminal.

18. The reference signal transmission method of claim 17, wherein the indication information comprises at least one of following:
a quantity of reference signals in a first reference signal set;
a quantity of reference signals in a second reference signal set;
a relationship between a first reference signal set and a second reference signal set;
a model identifier;
a model function identifier;
a dataset identifier;
a requested data volume or a reference signal transmission window duration; or
a request reason or a request purpose.

19. The reference signal transmission method of claim 16 or 17, wherein transmitting the reference signal configuration information to the terminal based on the indication information of the terminal comprises:
transmitting a radio resource control (RRC) message to the terminal, wherein the RRC message carries the reference signal configuration information.

20. The reference signal transmission method of claim 16 or 17, wherein after transmitting the reference signal to the terminal based on the reference signal configuration information, the method further comprises:
receiving first information transmitted from the terminal, wherein the first information is used for requesting to stop reference signal transmission or deactivate reference signal configuration information; and
transmitting second information to the terminal, wherein the second information is used to indicate the network side device deactivating the reference signal configuration information or indicate the terminal stopping receiving reference signals.

21. A terminal, comprising a memory, a transceiver and a processor,
wherein the memory is used for storing a computer program; the transceiver is used for receiving and transmitting data under control of the processor; and the processor is used for reading the computer program in the memory and performing following operations:
measuring a reference signal transmitted from a network side device according to reference signal configuration information, to obtain a measurement result of the reference signal,
where the reference signal configuration information is obtained through at least one of following:
receiving the reference signal configuration information transmitted from the network side device; or
receiving the reference signal configuration information transmitted, based on the indication information of the terminal, from the network side device

22. The terminal of claim 21, wherein the reference signal configuration information comprises at least one of following:
configuration information of reference signals in a first reference signal set, wherein measurement results of the reference signals in the first reference signal set are used as input data for model training, model updating, or performance monitoring;
configuration information of reference signals in a second reference signal set, wherein measurement results of the reference signals in the second reference signal set are used as label information for model training, model updating, or performance monitoring;
a relationship between a first reference signal set and a second reference signal set; or pattern information of a first reference signal set.

23. The terminal of claim 22, wherein the configuration information comprises at least one of following:
time domain information, frequency domain information, sequence information, and power information of a reference signal.

24. The terminal of claim 22, wherein the relationship between the first reference signal set and the second reference signal set comprises at least one of following:
the first reference signal set is a subset of the second reference signal set;
the first reference signal set is equal to the second reference signal set;
a beam corresponding to any reference signal in the first reference signal set is different from a beam corresponding to any reference signal in the second reference signal set; or
a spatial reception parameter corresponding to any reference signal in the first reference signal set is different from a spatial reception parameter corresponding to any reference signal in the second reference signal set.

25. The terminal of any of claims 21 to 24, wherein receiving the reference signal configuration information transmitted from the network side device comprises:
receiving a system message transmitted from the network side device, wherein the system message carries the reference signal configuration information.

26. The terminal of any of claims 21 to 24, wherein receiving the reference signal configuration information transmitted, based on the indication information of the terminal, from the network side device comprises:
receiving multiple candidates of reference signal configuration information transmitted from the network side device;
selecting at least one candidate of reference signal configuration information from the multiple candidates of reference signal configuration information;
transmitting the indication information to the network side device, wherein the indication information is used to indicate the at least one candidate of reference signal configuration information selected by the terminal; and
receiving the reference signal configuration information transmitted, based on the indication information of the terminal, from the network side device.

27. The terminal of any of claims 21 to 24, wherein receiving the reference signal configuration information transmitted, based on the indication information of the terminal, from the network side device comprises:
transmitting the indication information to the network side device, wherein the indication information is used to indicate the reference signal configuration information requested by the terminal; and
receiving the reference signal configuration information transmitted, based on the indication information of the terminal, from the network side device.

28. The terminal of claim 27, wherein the indication information comprises at least one of following:
a quantity of reference signals in a first reference signal set;
a quantity of reference signals in a second reference signal set;
a relationship between a first reference signal set and a second reference signal set;
a model identifier;
a model function identifier;
a dataset identifier;
a requested data volume or a reference signal transmission window duration; or
a request reason or a request purpose.

29. The terminal of any of claim 26 or 27, wherein receiving the reference signal configuration information transmitted, based on the indication information of the terminal, from the network side device comprises:
receiving a radio resource control (RRC) message transmitted from the network side device, wherein the RRC message carries the reference signal configuration information.

30. The terminal of claim 26 or 27, wherein the operations further comprise:
transmitting first information to the network side device, wherein the first information is used for requesting to stop reference signal transmission or deactivate reference signal configuration information; and
receiving second information transmitted from the network side device, wherein the second information is used to indicate the network side device deactivating the reference signal configuration information or indicate the terminal stopping receiving reference signals.

31. A network side device, comprising: a memory, a transceiver, and a processor,
wherein the memory is used for storing a computer program; the transceiver is used for receiving and transmitting data under control of the processor; and the processor is used for reading the computer program in the memory and performing following operations:
transmitting reference signal configuration information to a terminal; or, transmitting reference signal configuration information to a terminal based on indication information of the terminal; and
transmitting a reference signal to the terminal based on the reference signal configuration information, wherein the reference signal is used to measure the reference signal to obtain a measurement result of the reference signal.

32. The network side device of claim 31, wherein the reference signal configuration information comprises at least one of following:
configuration information of reference signals in a first reference signal set, wherein measurement results of the reference signals in the first reference signal set are used as input data for model training, model updating, or performance monitoring;
configuration information of reference signals in a second reference signal set, wherein measurement results of the reference signals in the second reference signal set are used as label information for model training, model updating, or performance monitoring;
a relationship between a first reference signal set and a second reference signal set; or
pattern information of a first reference signal set.

33. The network side device of claim 32, wherein the configuration information comprises at least one of following:
time domain information, frequency domain information, sequence information, or power information of the reference signal.

34. The network side device of claim 32, wherein the relationship between the first reference signal set and the second reference signal set comprises at least one of following:
the first reference signal set is a subset of the second reference signal set;
the first reference signal set is equal to the second reference signal set;
a beam corresponding to any reference signal in the first reference signal set is different from a beam corresponding to any reference signal in the second reference signal set; or
a spatial reception parameter corresponding to any reference signal in the first reference signal set is different from a spatial reception parameter corresponding to any reference signal in the second reference signal set.

35. The network side device of any of claims 31 to 34, wherein transmitting the reference signal configuration information to the terminal comprises:
transmitting a system message to the terminal, wherein the system message carries the reference signal configuration information.

36. The network side device of any of claims 31 to 34, wherein transmitting the reference signal configuration information to the terminal based on the indication information of the terminal comprises:
transmitting multiple candidates of reference signal configuration information to the terminal;
receiving the indication information transmitted from the terminal, wherein the indication information is used to indicate at least one candidate of reference signal configuration information selected by the terminal from the multiple candidates of reference signal configuration information; and
transmitting the reference signal configuration information to the terminal based on the indication information of the terminal.

37. The network side device of any of claims 31 to 34, wherein transmitting the reference signal configuration information to the terminal based on the indication information of the terminal comprises:
receiving the indication information transmitted from the terminal, wherein the indication information is used to indicate the reference signal configuration information requested by the terminal; and
transmitting the reference signal configuration information to the terminal based on the indication information of the terminal.

38. The network side device of claim 37, wherein the indication information comprises at least one of following:
a quantity of reference signals in a first reference signal set;
a quantity of reference signals in a second reference signal set;
a relationship between a first reference signal set and a second reference signal set;
a model identifier;
a model function identifier;
a dataset identifier;
a requested data volume or a reference signal transmission window duration; or
a request reason or a request purpose.

39. The network side device of claim 36 or 37, wherein transmitting the reference signal configuration information to the terminal based on the indication information of the terminal comprises:
transmitting a radio resource control (RRC) message to the terminal, wherein the RRC message carries the reference signal configuration information.

40. The network side device of claim 36 or 37, wherein the operations further comprise:
receiving first information transmitted from the terminal, wherein the first information is used for requesting to stop reference signal transmission or deactivate reference signal configuration information; and
transmitting second information to the terminal, wherein the second information is used to indicate the network side device deactivating the reference signal configuration information or indicate the terminal stopping receiving reference signals.

41. A data collection apparatus, used in a terminal, comprising:
a collection unit, used for measuring a reference signal transmitted from a network side device according to reference signal configuration information, to obtain a measurement result of the reference signal,
wherein the reference signal configuration information is obtained through at least one of following:
receiving the reference signal configuration information transmitted from the network side device; or
receiving the reference signal configuration information transmitted, based on indication information of the terminal, from the network side device.

42. The data collection apparatus of claim 41, wherein the reference signal configuration information comprises at least one of following:
configuration information of reference signals in a first reference signal set, wherein measurement results of the reference signals in the first reference signal set are used as input data for model training, model updating, or performance monitoring;
configuration information of reference signals in a second reference signal set, wherein measurement results of the reference signals in the second reference signal set are used as label information for model training, model updating, or performance monitoring;
a relationship between a first reference signal set and a second reference signal set; or
pattern information of a first reference signal set.

43. The data collection apparatus of claim 42, wherein the configuration information comprises at least one of following:
time domain information, frequency domain information, sequence information, or power information of the reference signal.

44. The data collection apparatus of claim 42, wherein the relationship between the first reference signal set and the second reference signal set comprises at least one of following:
the first reference signal set is a subset of the second reference signal set;
the first reference signal set is equal to the second reference signal set;
a beam corresponding to any reference signal in the first reference signal set is different from a beam corresponding to any reference signal in the second reference signal set; or
a spatial reception parameter corresponding to any reference signal in the first reference signal set is different from a spatial reception parameter corresponding to any reference signal in the second reference signal set.

45. The data collection apparatus of any of claims 41 to 44, wherein the collection unit is used for receiving a system message transmitted from the network side device, the system message carrying the reference signal configuration information.

46. The data collection apparatus of any of claims 41 to 44, wherein the collection unit is used for receiving multiple candidates of reference signal configuration information transmitted from the network side device, and
selecting at least one candidate of reference signal configuration information from the multiple candidates of reference signal configuration information;
the apparatus further comprises a transmission unit used for transmitting the indication information to the network side device, wherein the indication information is used to indicate the at least one candidate of reference signal configuration information selected by the terminal; and
the collection unit is used for receiving the reference signal configuration information transmitted, based on the indication information of the terminal, from the network side device.

47. The data collection apparatus of any of claims 41 to 44, wherein the apparatus further comprises a transmission unit used for transmitting the indication information to the network side device, the indication information being used to indicate the reference signal configuration information requested by the terminal; and
the collection unit is used for receiving the reference signal configuration information transmitted, based on the indication information of the terminal, from the network side device.

48. The data collection apparatus of claim 47, wherein the indication information comprises at least one of following:
a quantity of reference signals in a first reference signal set;
a quantity of reference signals in a second reference signal set;
a relationship between a first reference signal set and a second reference signal set;
a model identifier;
a model function identifier;
a dataset identifier;
a requested data volume or a reference signal transmission window duration; or
a request reason or a request purpose.

49. The data collection apparatus of claim 46 or 47, wherein the collection unit is used for receiving a radio resource control (RRC) message transmitted from the network side device, the RRC message carrying the reference signal configuration information.

50. The data collection apparatus of claim 46 or 47, wherein after obtaining the measurement result of the reference signal, the apparatus further comprises:
the transmission unit used for transmitting first information to the network side device, the first information being used for requesting to stop reference signal transmission or deactivate reference signal configuration information; and
the collection unit used for receiving second information transmitted from the network side device, the second information being used to indicate the network side device deactivating the reference signal configuration information or indicate the terminal stopping receiving reference signals.

51. A reference signal transmission apparatus, used in a network side device, comprising:
a transmission unit, used for transmitting reference signal configuration information to a terminal; or, transmitting reference signal configuration information to a terminal based on indication information of the terminal; and
transmitting a reference signal to the terminal based on the reference signal configuration information, wherein the reference signal is used to measure the reference signal to obtain a measurement result of the reference signal.

52. The reference signal transmission apparatus of claim 51, wherein the reference signal configuration information comprises at least one of following:
configuration information of reference signals in a first reference signal set, wherein measurement results of the reference signals in the first reference signal set are used as input data for model training, model updating, or performance monitoring;
configuration information of reference signals in a second reference signal set, wherein measurement results of the reference signals in the second reference signal set are used as label information for model training, model updating, or performance monitoring;
a relationship between a first reference signal set and a second reference signal set; or
pattern information of a first reference signal set.

53. The reference signal transmission apparatus of claim 52, wherein the configuration information comprises at least one of following:
time domain information, frequency domain information, sequence information, or power information of the reference signal.

54. The reference signal transmission apparatus of claim 52, wherein the relationship between the first reference signal set and the second reference signal set comprises at least one of following:
the first reference signal set is a subset of the second reference signal set;
the first reference signal set is equal to the second reference signal set;
a beam corresponding to any reference signal in the first reference signal set is different from a beam corresponding to any reference signal in the second reference signal set; or
a spatial reception parameter corresponding to any reference signal in the first reference signal set is different from a spatial reception parameter corresponding to any reference signal in the second reference signal set.

55. The reference signal transmission apparatus of any of claims 51 to 54, wherein the transmission unit is used for transmitting a system message to the terminal, the system message carrying the reference signal configuration information.

56. The reference signal transmission apparatus of any of claims 51 to 54, wherein the transmission unit is used for transmitting multiple candidates of reference signal configuration information to the terminal;
the apparatus further comprises a receiving unit used for receiving the indication information transmitted from the terminal, wherein the indication information is used to indicate at least one candidate of reference signal configuration information selected by the terminal from the multiple candidates of reference signal configuration information; and
the transmission unit is used for transmitting the reference signal configuration information to the terminal based on the indication information of the terminal.

57. The reference signal transmission apparatus of any of claims 51 to 54, wherein the apparatus further comprises a receiving unit used for receiving the indication information transmitted from the terminal, the indication information being used to indicate the reference signal configuration information requested by the terminal; and
the transmission unit is used for transmitting the reference signal configuration information to the terminal based on the indication information of the terminal.

58. The reference signal transmission apparatus of claim 57, wherein the indication information comprises at least one of following:
a quantity of reference signals in a first reference signal set;
a quantity of reference signals in a second reference signal set;
a relationship between a first reference signal set and a second reference signal set;
a model identifier;
a model function identifier;
a dataset identifier;
a requested data volume or a reference signal transmission window duration; or
a request reason or a request purpose.

59. The reference signal transmission apparatus of claim 56 or 57, wherein the transmission unit is used for transmitting a radio resource control (RRC) message to the terminal, the RRC message carrying the reference signal configuration information.

60. The reference signal transmission apparatus of claim 56 or 57, wherein the apparatus further comprises the receiving unit used for receiving first information transmitted from the terminal, the first information being used for requesting to stop reference signal transmission or deactivate reference signal configuration information; and
the transmission unit is used for transmitting second information to the terminal, the second information being used to indicate the network side device deactivating the reference signal configuration information or indicate the terminal stopping receiving reference signals.

61. A processor readable storage medium storing a computer program, wherein the computer program is used for causing a processor to perform the method of any of claims 1 to 10, or the method of any of claims 11 to 20.
